# EUROPÄISCHE PATENTANMELDUNG

(11) **EP 2 757 437 A1**
(43) Veröffentlichungstag der Anmeldung: **23.07.2014**
(21) Anmeldenummer: 13152244.3
(22) Anmeldetag: 22.01.2013
(51) Int. Cl.: G06F 1/16

(54) **Tragbares elektrisches Gerät**

(71) Anmelder: Siemens Aktiengesellschaft, 80333 München (DE)
(72) Erfinder: Andlauer, Timo, 76185 Karlsruhe (DE)

(57) **Zusammenfassung**

Die Erfindung betrifft ein tragbares elektrisches Gerät mit einem ersten Gehäuse (2) zur Aufnahme von ersten elektronischen Komponenten und einem zweiten Gehäuse (3) zur Aufnahme von zweiten elektronischen Komponenten, wobei mittels mindestens eines Schwenkscharniers (4, 5) das erste und das zweite Gehäuse (2, 3) mechanisch schwenkbar verbunden sind und wobei die ersten Komponenten mit den zweiten Komponenten kommunikativ verbunden sind. Dadurch, dass zur kommunikativen Verbindung zumindest ein Lichtwellenleiter vorgesehen ist, welcher durch eine Bohrung des mindestens einen Schwenkscharniers (4, 5) hindurch geführt ist, wird die Anzahl der Leitungen verringert, um die elektronischen Komponenten des ersten Gehäuses (2) mit denen des zweiten Gehäuses (3) kommunikativ zu verbinden.

## Beschreibung

Die Erfindung betrifft ein tragbares elektrisches Gerät mit einem ersten Gehäuse zur Aufnahme von ersten elektronischen Komponenten und einem zweiten Gehäuse zur Aufnahme von zweiten elektronischen Komponenten, wobei mittels mindestens eines Schwenkscharniers das erste und das zweite Gehäuse mechanisch schwenkbar verbunden sind und wobei die ersten Komponenten mit den zweiten Komponenten kommunikativ verbunden sind.

Ein derartiges tragbares elektrisches Gerät ist als Notebook, Laptop, Netbook oder in Form eines aus dem Siemens-Katalog ST 70 N, Ausgabe 2012, Kapitel 12 beschriebenen mobilen industrietauglichen Programmiergerätes bekannt. Das aus dem Siemens-Katalog bekannte Programmiergerät weist ein erstes und ein zweites Gehäuse bzw. ein Unterteil und ein dazu ausklappbares bzw. schwenkbares Oberteil auf, das mittels zwei Scharnieren mit dem Unterteil mechanisch schwenkbar verbunden ist. Sowohl das Unter- als auch das Oberteil weisen elektrische und elektronische Komponenten auf, wobei einige der Komponenten des Unterteils mit einigen Komponenten des Oberteils über Kupfer- oder Mini-Koaxialleitungen elektrisch verbunden sind. Beispielsweise ist das Unterteil gewöhnlich versehen mit einem Motherboard, einem Massenspeicher und einer Tastatur, das Oberteil umfasst z. B. ein Display, eine Webcam, ein Mikrofon und eine Antenne. Die Kupfer- oder Mini-Koaxialleitungen, die vom Unterteil in das Oberteil geführt werden müssen, um die elektrische Verbindung der verbindenden elektrischen und elektronischen Komponenten des Unter- und Oberteils 2, 3 zu bewirken bzw. herzustellen, sind parallel zu den Scharnieren angeordnet, die zusammen mit den Kupfer- oder Mini-Koaxialleitungen mittels einer Kunststoffabdeckung umhüllt werden.

Aufgrund dessen, dass sich die Anzahl der elektrisch zu verbindenden Komponenten zwischen dem Unter- und dem Oberteil des Programmiergerätes zunehmend erhöht, sind für derartige Programmiergeräte weitere elektrische Verbindungen erforderlich, wodurch sich wiederum der Platzbedarf für diese Verbindungen bzw. die Leitungen erhöht. Um zu vermeiden, dass sich trotz der Erhöhung der Anzahl der Verbindungen der Platzbedarf erhöht, können Leitungen mit geringerem Querschnitt verwendet werden, was allerdings eine Erhöhung der Verlustleistung bedeutet, oder es kann die Dimensionierung der Scharniere verringert werden, was sich nachteilig auf die mechanische Verbindung bzw. Stabilität zwischen Unter- und Oberteil auswirkt.

Der Erfindung liegt daher die Aufgabe zugrunde, ein tragbares elektrisches Gerät der eingangs genannten Art zu schaffen, welches derartige Nachteile vermeidet.

Diese Aufgabe wird dadurch gelöst, dass zur kommunikativen Verbindung zumindest ein Lichtwellenleiter vorgesehen ist, welcher durch eine Bohrung des mindestens einen Schwenkscharniers hindurch geführt ist.

Vorteilhaft ist, dass im Vergleich zur bekannten Lösung die Anzahl der Leitungen verringert werden kann, um elektronische Komponenten des Unterteils mit denen des Oberteils kommunikativ zu verbinden, was bedeutet, dass für eine Signalübertragung weniger Leitungen erforderlich sind. Ferner wird eine Kunststoffabdeckung zum Schutz der Leitung nicht mehr benötigt, weil der Lichtwellenleiter durch die Bohrung des Schwenkscharniers hindurch geführt ist.

In einer Ausgestaltung der Erfindung ist vorgesehen, dass an den beiden Enden der Bohrung jeweils ein Kupfer-Lichtwellenleiter-Konverter angeordnet ist. Dadurch können an sich bekannte mit Kupferleitungen versehene Unter- und Oberteile eines tragbaren elektrischen Gerätes weiterhin genutzt werden, wobei lediglich das oder die vorhandenen Schwenkscharniere durch die mit einer Bohrung versehenen Schwenkscharniere mit Kupfer-Lichtwellenleiter-Konverter ersetzt werden müssen.

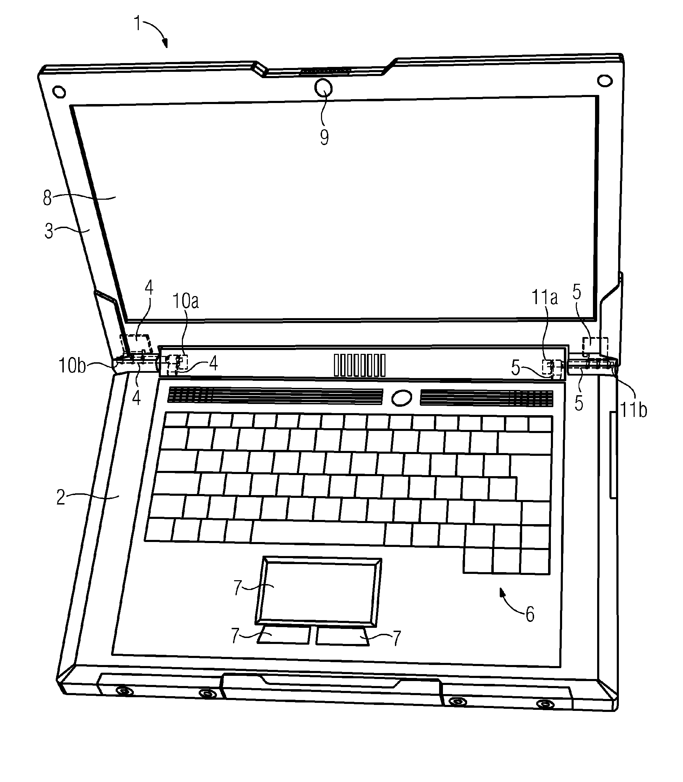

Die Erfindung wird nachfolgend anhand eines Ausführungsbeispiels unter Bezugnahme auf die einzige Figur der Zeichnung näher erläutert. Die Figur der Zeichnung zeigt ein tragbares elektrisches Gerät.

Ein tragbares elektrisches Gerät in Form eines Notebooks 1 weist ein erstes Gehäuse bzw. ein Unterteil 2 und ein zweites Gehäuse bzw. Oberteil 3 auf, die mittels zwei Scharnieren 4, 5 zueinander schwenkbar verbunden sind. Das Unterteil 2 ist mit ersten elektrischen und/oder elektronischen Komponenten versehen. Beispielsweise weist das Unterteil 2 ein Tastaturmodul 6, ein Touchpad-Modul 7 und weitere hier nicht dargestellte Komponenten auf, z. B. eine Festplatte mit Festplatten-Steuerelektronik und eine Grafikkarte. Das Oberteil 3 umfasst zweite elektrische und/oder elektronische Komponenten, beispielsweise ein Display 8, eine Webcam 9 und weitere ebenfalls nicht dargestellte Komponenten, z. B. Komponenten in Form eines Mikrofons und Antennen für eine UMTS- und WLAN-Kommunikation.

Einige der ersten Komponenten des Unterteils 2 sind mit einigen der zweiten Komponenten des Oberteils 3 über geeignete Kupfer- und /oder Mini- Koaxialleitungen kommunikativ verbunden. Zum Beispiel ist die im Unterteil 2 angeordnete Grafikkarte mit dem Display 8 des Oberteils 3 verbunden, und die in diesem Oberteil 3 angeordneten Antennen sind mit geeigneten im Unterteil 2 angeordneten Receivern verbunden. Um für eine Signalübertragung zwischen den Komponenten des Unter- und Oberteils 2, 3 die Anzahl der Leitungen im Bereich der Schwenkscharniere 4, 5 zu verringern, sind die Schwenkscharniere 4, 5 mit einer Bohrung versehen, durch die jeweils ein Lichtwellenleiter hindurchgeführt ist. An beiden Enden des Lichtwellenleiters bzw. an beiden Enden der Bohrung ist ein Kupfer-Lichtwellenleiter-Konverter 10a, 10b, 11a, 11b schwenkbar angeordnet. Diese ermöglichen den Anschluss bzw. die Ankopplung der Kupfer- und/oder Mini-Koaxialleitungen an den Lichtwellenleiter, wobei die Komponente des Unterteils 2 über Kupfer- und/oder Mini-Koaxialleitungen an den Kupfer-Lichtwellenleiter-Konverter 10a, 11a und die Komponente des Oberteils 3 über Kupfer- und/oder Mini-Koaxialleitungen an den Kupfer-Lichtwellenleiter-Konverter 10b, 11b geführt sind. Diese Kupfer-Lichtwellenleiter-Konverter 10a, 10b, 11a, 11b setzen einerseits die von den ersten und zweiten Komponenten zu den Konvertern 10a, 11a, 10b, 11b über die Kupfer-und/oder Mini-Koaxialleitungen übertragenen elektrischen Signale in optische Signale und andererseits die über den Lichtwellenleiter übertragenen optischen Signale in elektrische Signale zur Weiterleitung an die ersten und zweiten Komponenten über die Kupfer- und/oder Mini-Koaxialleitungen um.

Selbstverständlich können zumindest die Kupfer-Lichtwellenleiter-Konverter 10a, 11a, des Unterteils 2 Bestandteil eines Motherboards dieses Unterteils 2 sein (on-board-Konverter). Dadurch wird vermieden, eine Vielzahl von Einzelleitungen zu den Schwenkscharnieren 4, 5 zu führen, wobei ein Lichtwellenleiter von einem auf den "on-board-Konverter" gesteckten Lichtwellenleiter-Stecker durch die Bohrung der Scharniere 4, 5 geführt ist.

Die Erfindung lässt sich wie folgt zusammenfassen:
Ein tragbares elektrisches Gerät mit einem ersten Gehäuse 2 zur Aufnahme von ersten elektronischen Komponenten und einem zweiten Gehäuse 3 zur Aufnahme von zweiten elektronischen Komponenten, wobei mittels mindestens eines Schwenkscharniers 4, 5 das erste und das zweite Gehäuse 2, 3 mechanisch schwenkbar verbunden sind und wobei die ersten Komponenten mit den zweiten Komponenten kommunikativ verbunden sind,
   zeichnet sich dadurch aus, dass zur kommunikativen Verbindung zumindest ein Lichtwellenleiter vorgesehen ist, welcher durch eine Bohrung des mindestens einen Schwenkscharniers 4, 5 hindurch geführt ist. Mittels derartiger Maßnahmen kann die Anzahl der Leitungen verringert werden, um die elektronischen Komponenten des ersten Gehäuses 2 mit denen des zweiten Gehäuses 3 kommunikativ zu verbinden.

## Patentansprüche

1. Tragbares elektrisches Gerät mit einem ersten Gehäuse (2) zur Aufnahme von ersten elektronischen Komponenten und einem zweiten Gehäuse (3) zur Aufnahme von zweiten elektronischen Komponenten, wobei mittels mindestens eines Schwenkscharniers (4, 5) das erste und das zweite Gehäuse (2, 3) mechanisch schwenkbar verbunden sind und wobei die ersten Komponenten mit den zweiten Komponenten kommunikativ verbunden sind, **dadurch gekennzeichnet, dass** zur kommunikativen Verbindung zumindest ein Lichtwellenleiter vorgesehen ist, welcher durch eine Bohrung des mindestens einen Schwenkscharniers (4, 5) hindurch geführt ist.

2. Tragbares elektrisches Gerät nach Anspruch 1, **dadurch gekennzeichnet, dass** an den beiden Enden der Bohrung jeweils ein Kupfer-Lichtwellenleiter-Konverter (10a, 10b, 11a, 11b) angeordnet ist.
